# EUROPEAN PATENT SPECIFICATION

(11) **EP 4 687 117 B1**
(45) Date of publication and mention of the grant of the patent: **24.06.2026**
(21) Application number: 25157641.9
(22) Date of filing: 13.02.2025
(51) Int. Cl.: G06V 10/82, G06V 20/56

(54) **METHOD AND DEVICE WITH AUTONOMOUS DRIVING**
VERFAHREN UND VORRICHTUNG MIT AUTONOMEM FAHREN
PROCÉDÉ ET DISPOSITIF À CONDUITE AUTONOME

(30) Priority: 02.08.2024 KR 20240103398
(43) Date of publication of application: 04.02.2026
(73) Proprietor: Samsung Electronics Co., Ltd., Suwon-si, Gyeonggi-do 16677 (KR)
(72) Inventor: LEE, Dongwook, 16678 Suwon-si (KR); KWON, Ui Kun, 16678 Suwon-si (KR); SHIN, Seho, 16678 Suwon-si (KR); YOO, Jaewook, 16678 Suwon-si (KR); JANG, Sujin, 16678 Suwon-si (KR); KOO, Jahoo, 16678 Suwon-si (KR); KIM, Younho, 16678 Suwon-si (KR); NA, Joohan, 16678 Suwon-si (KR); PARK, Yonggonjong, 16678 Suwon-si (KR); BYEON, Moonsub, 16678 Suwon-si (KR); SEO, Youngwan, 16678 Suwon-si (KR); JO, Dae Ung, 16678 Suwon-si (KR); JI, Dae Hyun, 16678 Suwon-si (KR); HAN, Jaejoon, 16678 Suwon-si (KR); Huh, Jawook, 16678 Suwon-si (KR)
(74) Representative: Arnold & Siedsma

(56) References cited:
- CN-A- 110 069 060
- US-A1- 2023 051 486
- WENZHAO ZHENG ET AL: "GenAD: Generative End-to-End Autonomous Driving", ARXIV.ORG, CORNELL UNIVERSITY LIBRARY, 201 OLIN LIBRARY CORNELL UNIVERSITY ITHACA, NY 14853, 7 April 2024 (2024-04-07), XP091721534

## Description

### BACKGROUND

### 1. Field

The following description relates to an autonomous driving device and a driving method thereof, and more particularly, to an autonomous driving method that may respond to new driving environments and driving situations.

### 2. Description of Related Art

With recent growing interest in autonomous vehicles, the research and development of related technologies are actively underway. Recently, the advancement of machine-learning technology has enabled the collection of a large amount of driving data and, by using this, autonomous driving technology has been developed in a data-driven manner used for training artificial neural network models.

However, data-driven artificial neural network models have limitations in recognizing undefined objects and identifying the intentions of pedestrians and surrounding vehicles. ZHENG ET AL: "GenAD: Generative End-to-End Autonomous Driving", discloses a generative end-to-end autonomous driving framework in which sensor inputs are processed by neural networks to directly generate driving trajectories.

The above information may be presented as the related art to help with the understanding of the disclosure. No arguments or decisions are raised to whether any of the above description is applicable as the prior art related to the present disclosure.

### SUMMARY

The invention is defined by the appended claims. This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one general aspect, a method of determining a final path of a moving object includes acquiring pieces of sensor data, determining a first path of the moving object based on the pieces of sensor data, inputting at least one piece of sensor data among the pieces of sensor data into an encoder that encodes the at least one piece of sensor data, inputting the encoded at least one piece of sensor data into a generative neural network model that generates guide information on a path of the moving object, and determining the final path of the moving object based on the first path and the guide information.

Preferably, the determining of the first path includes determining a global path of the moving object based on the at least one piece of sensor data among the pieces of sensor data, recognizing and tracking a moving element of a surrounding environment of the moving object based on the at least one piece of sensor data among the pieces of sensor data, and generating map information, and determining a local path of the moving object based on the moving element, the map information, and the global path.

Preferably, the determining of the final path includes generating path modification information based on the global path and the guide information and modifying the local path based on the path modification information to determine the final path.

Preferably, a default prompt is set for the generative neural network model to output the guide information.

Preferably, the method further includes repeatedly determining the first path with a first frequency, and repeatedly generating the guide information with a second frequency, where the first frequency is greater than the second frequency.

Preferably, the encoding of the at least one piece of sensor data includes acquiring encoded results corresponding respectively to the pieces of sensor data and concatenating the encoded results to generate the encoded at least one piece of sensor data.

Preferably, the encoder is trained to generate the guide information by the generative neural network model receiving the encoded at least one piece of sensor data.

Preferably, the method further includes determining a query based on the encoded at least one piece of sensor data and acquiring experience data corresponding to the query from a memory.

Preferably, the memory stores past driving experience information including driving situation information, behavior information corresponding to the driving situation information, and reasoning information for the behavior information, and the acquiring the experience data includes comparing the query with the driving situation information stored by the memory and acquiring reference driving situation information corresponding to a current driving situation and acquiring reference prediction behavior information and reference reasoning information corresponding to the reference driving situation information.

Preferably, the generating of the guide information includes inputting the encoded at least one piece of sensor data and the experience data into the generative neural network model which infers the guide information therefrom.

Preferably, the memory stores the experience data by dividing the experience data into components, and the determining of the query includes acquiring element-specific feature vectors based on the encoded at least one piece of sensor data, acquiring component feature data by converting the element-specific feature vectors into a feature space, and determining element-specific query data based on the component feature data, and the acquiring the experience data preferably ncludes transmitting the element-specific query data to the memory and acquiring element-specific experience data corresponding to the element-specific query data.

Preferably, the generating of the guide information includes inputting the component feature data and the element-specific experience data into the generative neural network model which infers the guide information therefrom, where the generative neural network model has learned a causal relationship between the element-specific feature vectors.

Preferably, the method of determining a path further includes storing, in a memory, past driving experience information comprising driving situation information, behavior information corresponding to the driving situation information, and reasoning information for the behavior information.

In another general aspect, an electronic device includes one or more processors and a memory storing instructions, where the instructions, when executed by the one or more processors, cause the one or more processors to determine a first path of a moving object based on the pieces of sensor data, input at least one piece of sensor data among the pieces of sensor data into an encoder that encodes the at least one piece of sensor data, input the encoded at least one piece of sensor data into a generative neural network model, based on which the generative neural network model generates guide information on a path of the moving object, and determine a final path of the moving object, based on the first path and the guide information.

Preferably, the instructions, when executed by the one or more processors, cause the electronic device to determine a global path of the moving object based on the at least one piece of sensor data among the pieces of sensor data, recognize and track a moving element of a surrounding environment of the moving object based on the at least one piece of sensor data among the pieces of sensor data, and generate map information accordingly, and determine a local path of the moving object based on the moving element, the map information, and the global path.

Preferably, the instructions, when executed by the one or more processors, cause the one or more processors to generate path modification information based on the global path and the guide information, and modify the local path based on the path modification information and determine the final path.

Preferably, a default prompt is set for the generative neural network model to output the guide information.

Preferably, the instructions, when executed by the one or more processors, cause the one or more processors to cyclically determine the first path with a first time period, and cyclically generate the guide information with a second time period that is greater than the second time period.

Preferably, the instructions, when executed individually or collectively by the at least one processor, cause the electronic device to acquire encoded results corresponding respectively to the pieces of sensor data, and concatenate the encoded results and generate the encoded at least one piece of sensor data.

Preferably, the encoder is trained to generate the guide information by the generative neural network model receiving the encoded at least one piece of sensor data.

Preferably, the instructions, when executed by the one more processors, cause the one or more processors to determine a query based on the encoded at least one piece of sensor data, and acquire experience data corresponding to the query from the memory.

Preferably, the memory stores driving situation information, behavior information corresponding to the driving situation information, and reasoning information for the behavior information, and, preferably, the instructions, when executed by the one or more processors, cause the one or more processors to compare the query with the driving situation information stored by the memory and acquire current driving situation information, and acquire current prediction behavior information and current reasoning information corresponding to the current driving situation information.

Preferably, the instructions, when executed by the one or more processors, cause the electronic device to input the encoded at least one piece of sensor data and the experience data into the generative neural network model and acquire the guide information.

Preferably, the memory stores the experience data by dividing the experience data into components, and the instructions, when executed by the one or more processors, cause the one or more processors to acquire element-specific feature vectors based on the encoded at least one piece of sensor data, acquire component feature data by converting the element-specific feature vectors into a feature space, determine element-specific query data based on the component feature data, and transmit the element-specific query data to the memory and acquire element-specific experience data corresponding to the element-specific query data.

Preferably, the instructions, when executed by the one or more processors, cause the one or more processors to input the component feature data and the element-specific experience data into the generative neural network model to acquire the guide information, where the generative neural network model has learned a causal relationship between the element-specific feature vectors.

Other features and aspects will be apparent from the following detailed description, the drawings, and the claims.

### BRIEF DESCRIPTION OF THE DRAWINGS

FIG. 1 illustrates an example of a knowledge-driven autonomous driving method according to one or more embodiments.
FIG. 2 illustrates an example configuration of an autonomous driving device according to one or more embodiments.
FIG. 3 illustrates an example detailed configuration of the autonomous driving device according to one or more embodiments.
FIG. 4 illustrates an example of an operating method of the autonomous driving device according to one or more embodiments.
FIG. 5 illustrates another example of an operating method of the autonomous driving device according to one or more embodiments.
FIG. 6A illustrates an example of determining a driving path according to a data-driven autonomous driving method, according to one or more embodiments.
FIG. 6B illustrates an example of determining a driving path according to an autonomous driving method according to one or more embodiments.
FIG. 7 illustrates an example of determining a driving path according to an autonomous driving method according to one or more embodiments.
FIG. 8 illustrates another example of an operating method of the autonomous driving device according to one or more embodiments.
FIG. 9 illustrates an example of compositional generalization according to one or more embodiments.
FIG. 10 illustrates an example of a path determination method according to one or more embodiments.
FIG. 11 illustrates an example of an electronic device according to one or more embodiments.

Throughout the drawings and the detailed description, unless otherwise described or provided, the same or like drawing reference numerals will be understood to refer to the same or like elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order. Also, descriptions of features that are known after an understanding of the disclosure of this application may be omitted for increased clarity and conciseness.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

The terminology used herein is for describing various examples only and is not to be used to limit the disclosure. The articles "a," "an," and "the" are intended to include the plural forms as well, unless the context clearly indicates otherwise. As used herein, the term "and/or" includes any one and any combination of any two or more of the associated listed items. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof.

Throughout the specification, when a component or element is described as being "connected to," "coupled to," or "joined to" another component or element, it may be directly "connected to," "coupled to," or "joined to" the other component or element, or there may reasonably be one or more other components or elements intervening therebetween. When a component or element is described as being "directly connected to," "directly coupled to," or "directly joined to" another component or element, there can be no other elements intervening therebetween. Likewise, expressions, for example, "between" and "immediately between" and "adjacent to" and "immediately adjacent to" may also be construed as described in the foregoing.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein. The use of the term "may" herein with respect to an example or embodiment, e.g., as to what an example or embodiment may include or implement, means that at least one example or embodiment exists where such a feature is included or implemented, while all examples are not limited thereto.

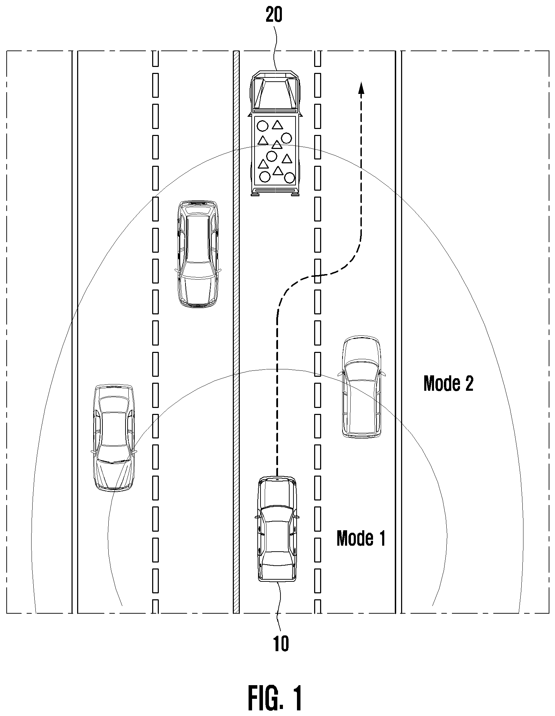

FIG. 1 illustrates an example of a knowledge-driven autonomous driving method according to one or more embodiments.

Some embodiments described herein include an autonomous driving device that is an integrated system of hardware and software that enables a moving object (e.g., a vehicle) to drive automatically without a driver's intervention. Although autonomous driving is described herein, the embodiments and techniques of autonomous driving are applicable to semi-autonomous or assisted-driving. The autonomous driving device may detect surrounding environments by using a mix of sensor types, for example, a sensor, a camera, radio detection and ranging (RADAR), light detection and ranging (LiDAR), or the like. The autonomous driving device may analyze data in real time through an algorithm (e.g., an artificial intelligence algorithm), may plan a driving path based on the analysis, and may control the speed and direction of a vehicle accordingly. The autonomous driving device may be referred to herein as a moving object, an ego-vehicle, an autonomous vehicle, or an unmanned driving device.

Previous autonomous driving algorithms were developed through a direct rule-based module (e.g., a recognition module, a prediction module, a determination module, or a control module). Recently, with the advancement of machine-learning technology, a large corpus of driving data has been collected, and, by using this, an autonomous driving method has been developed in a method for training neural network models.

More specifically, according to some embodiments, the autonomous driving device may control the moving object through the knowledge-driven autonomous driving method. Before describing the knowledge-driven autonomous driving method, a data-driven autonomous driving method is described first.

The data-driven autonomous driving method may recognize static and dynamic objects in the vicinity of the autonomous driving device based on sensor data input from a sensor (or sensors), such as a camera, LiDAR, and/or RADAR, and may predict future movements of the recognized static and dynamic objects external to the ego vehicle by estimating the previous trajectories of the recognized static and dynamic objects. Based on this, a path of the autonomous driving device may be predicted, and autonomous driving may be executed by controlling a vehicle according to the path. However, the data-driven autonomous driving method may not readily respond to unlearned/novel driving situations. For example, the data-driven autonomous driving method may recognize predefined classes and objects, such as vehicles, pedestrians, or signals, included in training data, but may not readily respond to undefined objects and therefore may not readily determine driving situations by identifying a relationship among the objects. Accordingly, the data-driven autonomous driving method may not respond to corner cases (new driving situations) and may not be appropriate for recognizing environments (e.g., weather, time of day, or seasons) changing over time. In other words, the data-driven autonomous driving method may not respond to new situations despite being trained by tens of thousands of hours or more of driving data. On the other hand, humans may drive after a certain number of hours (e.g., 10-20 hours) of training and practice. This is because humans have the ability to recognize and determine surrounding situations based on their basic common sense and understanding of the world, in addition to the learning of driving skills through practice.

In some embodiments, the knowledge-driven autonomous driving method may respond to new driving situations by actively using accumulated knowledge and experience, in contrast to the data-driven autonomous driving method, which relies on existing sensor data. The knowledge-driven autonomous driving may involve a vehicle that plans and control a driving path thereof by using accumulated data and knowledge, which may predict and prepare various driving situations based on collected sensor data, may recognize surrounding situations in real time, and may make optimal driving decisions. By doing so, the knowledge-driven autonomous driving method may understand traffic laws based on common sense, like humans, may identify the intentions of pedestrians and surrounding vehicles, may perform interaction on demand, and may drive accordingly.

Referring to FIG. 1, in some embodiments, the knowledge-driven autonomous driving method may control a moving object in two modes, referred to as mode 1 and mode 2. Mode 1 may use the previously-mentioned autonomous driving method that responds promptly to surrounding situations by using a rule-based autonomous driving method or data-driven autonomous driving method. The autonomous driving method in mode 1 may process general driving situations usually represented in training data and may make driving decisions according to a set of rules and patterns. The autonomous driving method in mode 1 may be characterized by fast and accurate responses mainly in predictable situations. For example, the autonomous driving method in mode 1 may perform general driving tasks, such as the recognizing of road signs, the keeping of lanes, stopping and starting according to traffic signals, and other predictable/common driving environments and situations.

The autonomous driving method in mode 2 may recognize and describe current driving situations and may determine how the autonomous driving device responds to unfamiliar environments and driving situations. The autonomous driving method in mode 2 may recognize interaction (or relations) between surrounding objects and predict their movements and may provide to mode 2 guide information and grounds (reasons) for decisions that produced the guide information; mode 2 may include a function for explaining these determination processes and grounds for decisions. In brief, mode 2 may interpret a situation and provide information about its interpretation and the basis of the same. For example, the autonomous driving method in mode 2 may be configured to provide appropriate responses even to unexpected obstacles on the roads or abnormal traffic situations. Mode 1 and mode 2 may be applied simultaneously, however, the autonomous driving device may mostly perform autonomous driving in mode 1. The autonomous driving device may activate mode 2 when a specific condition is met and may control driving by using the decisions in mode 1 and mode 2 together. In this manner, the two modes may operate complementarily such that the autonomous driving device may operate safely and efficiently in various driving situations.

For example, if an autonomous driving vehicle 10 determines that it is driving behind, and in the same lane as, a cargo vehicle 20, the autonomous driving vehicle 10 may invoke mode 2 which may determine that objects loaded in a cargo box of the front cargo vehicle 20 may fall, and based thereon the autonomous driving vehicle 10 may guide a lane change in mode 1 to avoid an anticipated risk factor.

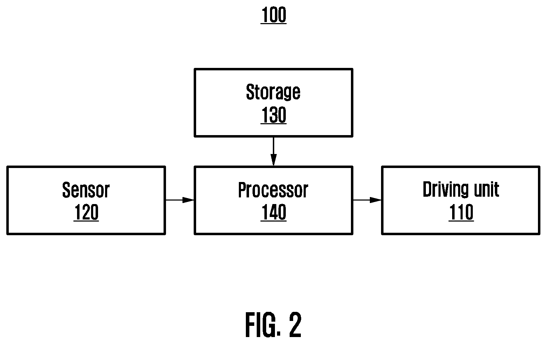

FIG. 2 illustrates an example configuration of an autonomous driving device according to one or more embodiments. The description of FIG. 1 is generally applicable to FIG. 2.

Referring to FIG. 2, an autonomous driving device 100 may include a driving unit 110, a sensor 120, a storage 130, and a processor 140. The terms, such as "[something]unit," "[something]-er(or)," etc., as used hereinafter refer to a part for processing at least one function or operation and may be implemented as hardware, software (in the form of instructions), or a combination of hardware and software.

The driving unit 110 may be a component for driving the autonomous driving device 100. If the autonomous driving device 100 is implemented as a vehicle, the driving unit 110 may include various components for driving, such as propulsion, braking, speed, or direction-control of the autonomous driving device 100. Specifically, various mechanical components and software/instructions, such as an engine, a steering system, or a brake system, may be included. The driving unit 110 may be implemented as the same as the configuration of a general vehicle and may translate high-level driving instructions into actual control of the aforementioned vehicle components.

The sensor 120 may sense the surrounding environments of the autonomous driving device 100. The sensor 120 is representative of one or more various types of sensors and assemblies thereof, such as a camera, a depth camera, a motion detection sensor, an infrared sensor, an ultrasonic sensor, and/or a laser sensor, and the positions and numbers thereof may vary depending on the type and size of the autonomous driving device 100.

The storage 130 may store various pieces of software/instructions and data required for the operation of the autonomous driving device 100. For example, the storage 130 may store past driving experience information. The past driving experience information may include driving situation information, behavior information corresponding to the driving situation information, and/or reasoning information for (e.g., explaining) the behavior information. Although FIG. 2 illustrates one storage 130, this is representative of one or more storages. In addition, the storage 130 may be implemented as various types, such as a non-volatile memory, a volatile memory, or a storage, and as an external memory device or a server that is not embedded in the autonomous driving device 100.

The processor 140 (in practice, one or more individual processors) may control the overall operation of the autonomous driving device 100.

In some embodiments, the processor 140 may include a digital signal processor (DSP) that processes a digital signal, a microprocessor, and/or a time controller (TCON). However, embodiments are not limited thereto, and the processor 140 may be implemented as including one or more of a central processing unit (CPU), a microcontroller unit (MCU), a microprocessing unit (MPU), a controller, an application processor (AP), a communication processor (CP), an ARM processor, or the like. In addition, the processor 140 may be implemented as a system on chip (SoC) with a processing algorithm embedded therein or a large-scale integration (LSI) or may also be implemented in a field-programmable gate array (FPGA).

The processor 140 may control the driving unit 110 according to results sensed through the sensor 120. If the sensor 120 includes an image sensor, the sensor 120 may provide the processor 140 with an image capturing the surroundings of the autonomous driving device 100. Based on sensor data received from the sensor 120, the processor 140 may determine a final path of the autonomous driving device 100.

More specifically, the processor 140 may determine a first path of a moving object (e.g., an ego vehicle) based on pieces of sensor data. The first path may be a path determined by using only mode 1 described above with reference to FIG. 1. The processor 140 may determine a global path (e.g., a large-scale movement path or route) of the moving object based on at least one piece of sensor data among the pieces of sensor data. The processor 140 may recognize and track a moving element of a surrounding environment of the moving object based on the at least one piece of sensor data among the pieces of sensor data and may generate map information. The processor 140 may determine a local path of the moving object based on the moving element, the map information, and the global path.

The processor 140 may use an encoder to encode the at least one piece of sensor data among the pieces of sensor data, may input the encoded at least one piece of sensor data into a generative neural network model, and may generate guide information on a path of the autonomous driving device 100. The guide information may be information generated through mode 2 described above with reference to FIG. 1. The generative neural network model may be an intelligence model that may learn a pattern of given input data and may generate new data based thereon. For example, the generative neural network model may include a large language model (LLM), a large multi-modal model (LMM), and a world model.

Based on the first path and the guide information, the processor 140 may determine the final path of the autonomous driving device 100.

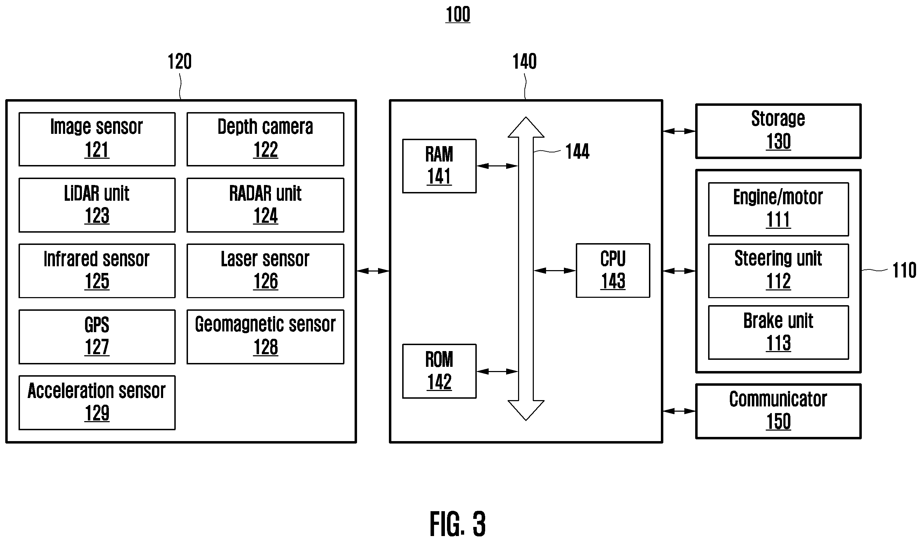

FIG. 3 illustrates an example detailed configuration of the autonomous driving device according to one or more embodiments. The description provided with reference to FIGS. 1 and 2 is generally applicable to FIG. 3.

Referring to FIG. 3, the autonomous driving device 100 may include the driving unit 110, the sensor 120, the storage 130, the processor 140, and a communicator 150.

The driving unit 110 may include various devices and units for driving the autonomous driving device 100. For example, if the autonomous driving device 100 is a device that drives on the ground, the driving unit 110 may include an engine/motor, a brake unit, and a steering unit.

An engine/motor 111 may be any combination of an internal combustion engine, an electric motor, a steam engine, and a Stirling engine. For example, if the autonomous driving device 100 is a gas-electric hybrid car, an engine/motor 211 may be a gasoline engine and an electric motor. For example, the engine/motor 111 may supply power for the autonomous driving device 100 to drive a preset driving path.

A steering unit 112 may be a combination of mechanisms configured to control the direction of the autonomous driving device 100. For example, the steering unit 112 may change the direction of the autonomous driving device 100 when the autonomous driving device 100 recognizes obstacles during driving. If the autonomous driving device 100 is a vehicle, the steering unit 112 may change the direction of the autonomous driving device 100 according to the turning of a handle clockwise or counterclockwise.

A brake unit 113 may be a combination of mechanisms configured to decelerate the autonomous driving device 100. For example, a brake unit may use friction to reduce the speed of a wheel/tire. The brake unit 113 may decelerate the autonomous driving device 100 when the autonomous driving device 100 recognizes obstacles during driving.

As described above, the driving unit 110 may be, for example, the autonomous driving device 100 that drives on the ground, but examples are not limited thereto. The driving unit 110 may include a flight propulsion unit, a propeller, or wings, and may also include various ship propulsion devices.

The sensor 120 may include a plurality of sensors configured to sense the information on the surrounding environments of the autonomous driving device 100. For example, the sensor 120 may include at least one of an image sensor 121, a depth camera 122, a LiDAR unit 123, a RADAR unit 124, an infrared sensor 125, a laser sensor 126, a global positioning system (GPS) 127, a geomagnetic sensor 128, and an acceleration sensor 129, as non-limiting examples.

The image sensor 121 may capture an external object positioned outside the autonomous driving device 100. The captured external object may use data for changing at least one of the speed and direction of the autonomous driving device 100. The image sensor 121 may be implemented as various types of sensors, such as a charge-coupled device (CCD) or a complementary metal-oxide-semiconductor (CMOS). In addition, the depth camera 122 may acquire depth for determining a distance from the autonomous driving device 100 to the external object.

The LiDAR unit 123, the RADAR unit 124, or the infrared sensor 125 may be a sensor configured to output a specific signal and detect external objects in an environment where the autonomous driving device 100 is. More specifically, the LiDAR unit 123 may include a laser light source and/or a laser scanner configured to emit laser and a detector configured to detect the reflection of laser. The RADAR unit 124 may be a sensor configured to detect objects in the environment where the autonomous driving device 100 is by using wireless signals. In addition, the RADAR unit 124 may be configured to detect the speed and/or direction of the objects. The infrared unit 125 may be a sensor configured to detect external objects in the environment where the autonomous driving device 100 is by using the light of a wavelength in an infrared range.

The GPS 127, the geomagnetic sensor 128, or the acceleration sensor 129 may be a sensor configured to acquire information on the speed, direction, or position of the autonomous driving device 100. The GPS 127 may receive latitude and longitude data of the position of the autonomous driving device 100 through artificial satellites. The geomagnetic sensor 128 and the acceleration sensor 129 may determine the current status of the autonomous driving device 100 according to the movement amount of the autonomous driving device 100.

The storage 130 may store data required for the processor 140 to execute all kinds of processing as described above with reference to FIG. 2. For example, the processor 140 may be implemented as an internal memory, such as read-only memory (ROM) or random-access memory (RAM), or may also be implemented as a separate memory from the processor 140. In this case, the storage 130 may be implemented as a memory embedded in the autonomous driving device 100 or a memory attachable to or detachable from the autonomous driving device 100 depending on data storage purpose. For example, data for driving the autonomous driving device 100 may be stored in the memory embedded in the autonomous driving device 100, and data for expanding the autonomous driving device 100 may be stored in the memory attachable to or detachable from the autonomous driving device 100. Meanwhile, the memory embedded in the autonomous driving device 100 may be implemented as non-volatile memory, volatile memory, flash memory, hard disk drive (HDD), solid state drive (SSD), or the like. The memory attachable to or detachable from the autonomous driving device 100 may be implemented as memory card (e.g., micro-SD card, USB memory, etc.), external memory (e.g., USB memory) connectable to a USB port, or the like.

The processor 140 may include a RAM 141, a ROM 142, a CPU 143, and a bus 144. The RAM 141, the ROM 142, and the CPU 143 may be connected to one another through the bus 144. The processor 140 may be implemented as an SoC.

The RAM 141 may be a memory for reading various commands or instructions related to the driving of the autonomous driving device 100. The ROM 142 may store an instruction set for booting a system. If a turn-on command is input to the autonomous driving device 100 and power is supplied, the CPU 143 may copy an operating system (O/S) stored in the storage 130 to the RAM 141 according to the turn-on command stored in the ROM 142 and may execute the O/S to boot the system. After booting is complete, the CPU 143 may copy various application programs stored in the storage 130 to the RAM 141 and may execute the application programs copied to the RAM 141 to perform various operations. The processor 140 may perform various operations by using a module stored in the storage 130.

The communicator 150 may perform communication between the autonomous driving device 100 and an external device. For example, the communicator 150 may receive and transmit driving information of the autonomous driving device 100 and the external device. For example, the communicator 150 may perform communication through various communication methods, such as infrared communication, Wi-Fi, Bluetooth, Zigbee, Beacon, near-field communication (NFC), wide area network (WAN), Ethernet, IEEE 1394, high-definition multimedia interface (HDMI), USB, mobile high-definition link (MHL), Audio Engineering Society/European Broadcasting Union (AES/EBU), Optical, or Coaxial. However, the communicator 150 may also perform communication on the driving information through a server (not shown) in some cases.

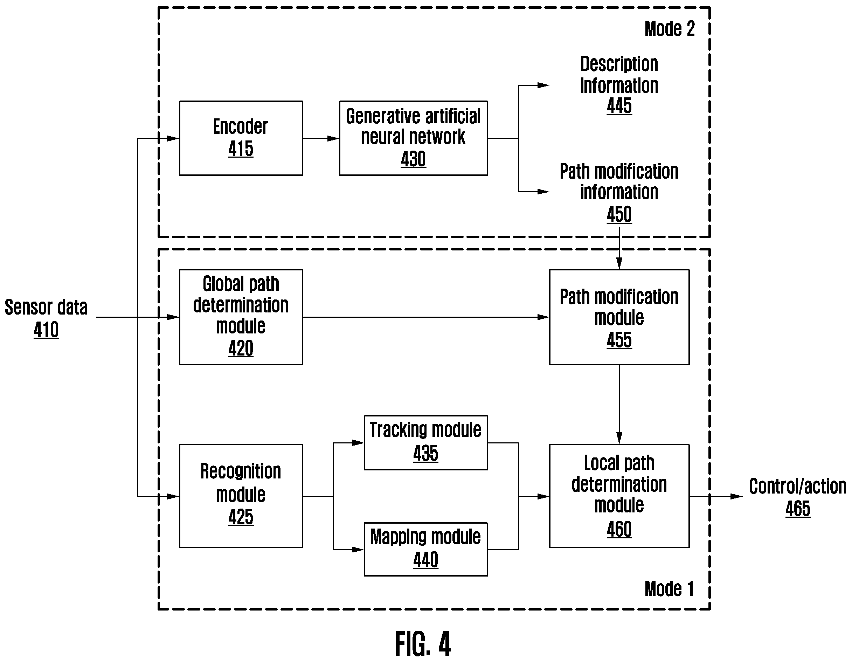

FIG. 4 illustrates an example of an operating method of the autonomous driving device according to one or more embodiments. The description provided with reference to FIGS. 1 to 3 may also apply to FIG. 4.

Referring to FIG. 4, the autonomous driving device 100, In one or more embodiments, may include an encoder 415, a global path determination module 420, a recognition module 425, a generative neural network 430, a tracking module 435, a mapping module 440, a path modification module 455, and a local path determination module 460. The term "module" may be a unit including one or a combination of two or more of hardware, software, or firmware. The "module" may be used interchangeably with other terms, for example, "unit," "logic," "logical block," "component," or "circuit." The "module" may be a minimum unit of an integrally formed component or part thereof. The "module" may be a minimum unit for performing one or more functions or part thereof. The "module" may be implemented mechanically or electronically. For example, the "module" may include at least one of an application-specific integrated circuit (ASIC) chip, an FPGA, or a programmable-logic device for performing certain operations that are well known or to be developed in the future.

In FIG. 4, the autonomous driving device 100 is illustrated as separately configured components to describe functions by distinguishing the functions from one another. Thus, when implementing a product in reality, it may be configured such that all or some of the encoder 415, the global path determination module 420, the recognition module 425, the generative neural network 430, the tracking module 435, the mapping module 440, the path modification module 455, and the local path determination module 460 are processed in the processor 140.

The autonomous driving device 100 may acquire sensor data 410. For example, the autonomous driving device 100 may acquire at least one sensor data 410 from the image sensor 121, the depth camera 122, the LiDAR unit 123, the RADAR unit 124, the infrared sensor 125, the laser sensor 126, the GPS 127, the geomagnetic sensor 128, and the acceleration sensor 129. Although FIG. 4 illustrates the same sensor data 410 being input to both the global path determination module 420 and the recognition module 425, different components of the sensor data may be input thereto according to embodiments. For example, sensor data acquired from the image sensor 121, the depth camera 122, the LiDAR unit 123, and the RADAR unit 124 may be input to the encoder 415, sensor data acquired from the GPS 127, the geomagnetic sensor 128, and the acceleration sensor 129 may be input to the global path determination module 420, and sensor data acquired from the image sensor 121, the depth camera 122, the LiDAR unit 123, the RADAR unit 124, the infrared sensor 125, the laser sensor 126, the GPS 127, the geomagnetic sensor 128, and the acceleration sensor 129 may be input to the recognition module 425. However, the types of sensor data 410 input to the encoder 415, the global path determination module 420, and the recognition module 425 are not limited to the foregoing examples.

In an embodiment, the autonomous driving device 100 may perform the operation of mode 1 in a first cycle and may perform the operation of mode 2 in a second cycle. Furthermore, the second cycle may be less than or equal to the first cycle. Mode 1 may be referred to as a fast-thinking mode or a motor intelligence mode and mode 2 may be referred to as a slow-thinking mode or a cognitive intelligence mode. For example, the autonomous driving device 100 may perform the operation of mode 1 at 30 Hz and may perform the operation of mode 2 at 1 Hz. The autonomous driving device 100 may perform autonomous driving by operating mode 1 and mode 2 complementarily. The autonomous driving device 100 may determine a first path by performing the operation of mode 1. The first path may be a local path generated only by the operation of mode 1 without the intervention of mode 2. If there is no intervention of mode 2, the autonomous driving device 100 may determine the first path to be a final (used) path. If the autonomous driving device 100 performs the operation of mode 2 (in an operation cycle of mode 2), the autonomous driving device 100 may perform the operation mode 2 to generate guide information and may determine the final path of a moving object by modifying the first path by using the guide information.

In an embodiment, the autonomous driving device 100 may evaluate the reliability of the first path determined in mode 1 and, if the reliability is less than a threshold value, may perform (or make use of) mode 2.

The global path determination module 420 may determine a global path by receiving the sensor data 410. The global path is the entire driving path of the autonomous driving device 100 from a starting point to a destination (i.e., a route) and may be determined by using GPS data, map data, and traffic information. The global path is a high-level path plan, in which the global path determination module 420 may determine to where the autonomous driving device 100 should go from a big-picture perspective. For example, the global path determination module 420 may select major roads and highways in intercity or long-distance trips. The global path may be a road-level path.

The recognition module 425 may detect and recognize surrounding objects in real time by receiving the sensor data 410 (e.g., images or LiDAR cloud points). For example, the recognition module 425 may identify and classify objects, such as vehicles, pedestrians, bicycles, road signs, or traffic lights, on/near the road, may detect obstacles on a driving path to provide information used to avoid the obstacles, and may recognize lanes, road boundaries, or road markings to help a vehicle maintain a proper path.

The tracking module 435 may track the position and movement of an object detected in the recognition module 425 continuously. For example, the tracking module 435 may track the position and speed of a moving object (e.g., another vehicle or pedestrian) around the autonomous driving device 100 or may predict a moving path of the autonomous driving device 100 to prevent potential collisions and ensure safe driving.

The mapping module 440 may generate and update a map of a surrounding environment of the autonomous driving device 100 and may identify the current position of the autonomous driving device 100 based on precise map data.

If there is path modification information 450 generated through mode 2, the path modification module 455 may modify the global path generated in the global path determination module 420 based on the path modification information 450 or may modify the local path by transmitting the path modification information 450 to the local path determination module 460 even without modifying the global path. For example, the path modification module 455 may determine a recommended path included in the path modification information 450 to have a higher priority than the global path generated in the global path determination module 420 when the recommended path included in the path modification information 450 contradicts the global path generated in the global path determination module 420. If there is no path modification information 450 generated through mode 2 (e.g., if the autonomous driving device 100 operates only in mode 1 without the intervention of mode 2), the path modification module 455 may transmit (pass-through) the global path generated in the global path determination module 420 to the local path determination module 460.

The local path determination module 460 may determine the local path based on information received from the tracking module 435, the mapping module 440, and the path modification module 455. The local path may be a driving path within the close distance (e.g., within or near sensor range) from the current position of the autonomous driving device 100, which is determined based on the entire path set in the global path. The local path may be a lane-level driving path. The local path determination module 460 may generate control/action data 465 for controlling the driving unit 110 according to the determined final local path.

Each of the global path determination module 420, the recognition module 425, the tracking module 435, the mapping module 440, the path modification module 455, and the local path determination module 460 may be a rule-based module or a data-driven neural network module trained based on a neural network. In addition, the structure of the modules for performing mode 1 in FIG. 4 is just an embodiment, a detailed structure may change. For example, a prediction module may be added after the tracking module 435. Alternatively, an individual module, such as the global path determination module 420, the recognition module 425, the tracking module 435, the mapping module 440, the path modification module 455, and the local path determination module 460, may not be implemented as a separate module, and the whole model may be implemented as a neural network in one end-to-end structure.

Sensor data 4510 itself may not be suitable for an input domain of a generative neural network model 430. Accordingly, an encoder 415 may encode the sensor data 510 to be suitable for an input of the generative neural network model 430. If the sensor data 410 includes a multi-modality, to support this, the encoder 415 may be a multi-modal encoder (MMEnc). More specifically, an encoder may include multiple distinct encoders, which may correspond respectively to the types of data included in the sensor data 410. For example, an image encoder may encode image data, which is an output of the image sensor 121, and a LiDAR encoder may encode a LiDAR cloud point, which is an output of the LiDAR unit 123. Encoded results, which are outputs of the plurality of encoders, may be concatenated into one and may be input to the generative neural network model 430.

The generative neural network model 430 may be implemented based on an LLM, an LMM, and/or a world model. The LLM may refer to a language model including an neural network, which is pre-trained with an enormous amount of text data. The LLM may include parameters (e.g., 100 billion or more parameters) that are 10 times or more parameters compared to a general language model. The LLM may use a transformer neural network structure based on an attention mechanism. An attention mechanism is technology that helps an intelligence model focus its attention on an important part of input data. The attention mechanism may predict to which degree at least some of time-series input data (e.g., input data, such as voice or video, or input data of several neural network layers) contributes to an intermediate or final neural network output and may be used to predict output data. A recurrent neural network (RNN) that processes each element of a sequence sequentially may show degraded prediction performance when there is information dependency between long-range time series, but the attention mechanism may use the information dependency between long-range time series by controlling weight attention in the overall (or partial) context of input data.

For example, the LLM may include a transformer in an encoder-decoder structure. An encoder may output compressed (encoded) information (e.g., the attention mechanism) by processing input data, and a decoder may output output data in a token unit by processing the compressed/encoded information. Each of the encoder and the decoder may include an independent respective attention network and may include a cross-attention network connecting the encoder to the decoder.

For example, the LLM may be trained in two steps of pre-training and fine-tuning. The pre-training is a process that enables the LLM to process an enormous amount of text data and learn general language knowledge and may include, for example, self-supervised learning that allows the prediction of a next word by using a previous word sequence of a text sequence. The fine-tuning is a process of training the LLM to be suitable for specific domains (e.g., a chatbot, translation, summarization, or Q&A) or tasks and may further train the LLM through supervised training (or adaptive training) by using a dataset suitable for a domain purpose based on the pre-trained LLM. The LLM may perform tasks through a text input including a natural language, that is, a prompt. For example, the LLM may include bidirectional encoder representations from a transformer (BERT) or a generative pre-trained transformer (GPT). The term 'LLM' may refer to a neural network model itself but may also refer to an LLM-based application model (e.g., a chatbot, translation, summarization, text classification, or sentence generation). For example, the LLM may refer to an LLM-based chatbot, such as ChatGPT or the like. The LLM may also include an inference engine using an LLM neural network model. For example, "inputting an input prompt to an LLM" may refer to "inputting the input prompt to an LLM-based inference engine".

The generative neural network model 430 may be an LLM that receives encoded sensor data and generates at least one of description information 445 and the path modification information 450. A default prompt may be set for the generative neural network model 430 to receive encoded sensor data and generate the description information 445 and the path modification information 450. For example, the default prompt indicating "when receiving input data, based on the input data, notify a current driving situation and a direction to drive" may be set for the generative neural network model 430. The description information 445 may include current driving situation information determined based on the sensor data 410, behavior information corresponding to the current driving situation information, and/or reasoning information for predicted behavior (e.g., information indicating why the particular behavior information was predicted). The path modification information 450 may include guide information about a path. For example, the path modification information 450 may include recommended lane-level path information.

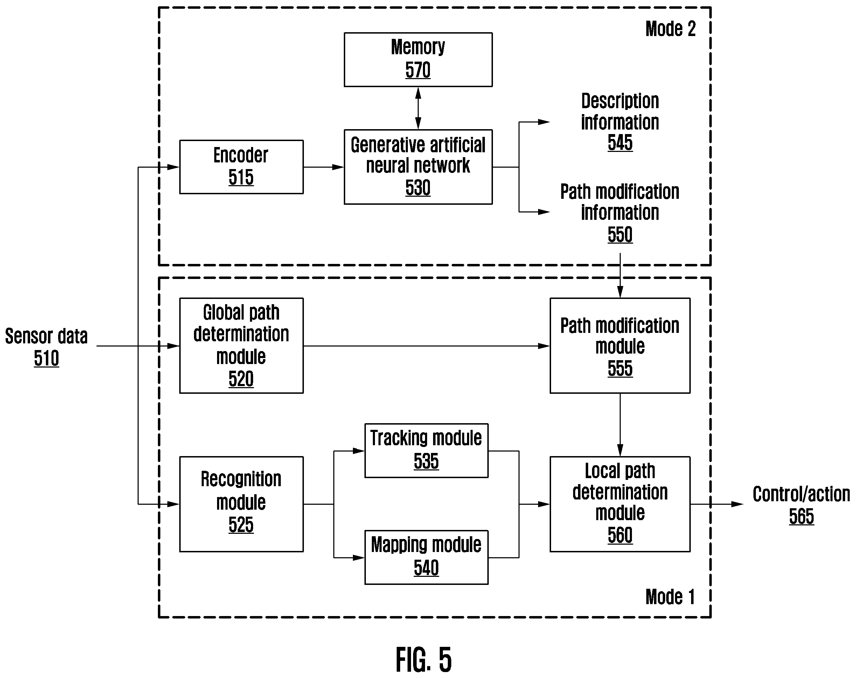

FIG. 5 illustrates another example of an operating method of the autonomous driving device according to one or more embodiments.

Referring to FIG. 5, the autonomous driving device 100, In one or more embodiments, may include the encoder 515, a global path determination module 520, a recognition module 525, the generative neural network 530, a tracking module 535, a mapping module 540, a path modification module 555, a local path determination module 560, and a memory 570. The description provided with reference to FIGS. 1 to 4 may also apply to FIG. 5 (similar reference numbers indicate correspondences/equivalences). For example, the operations of the encoder 415, the global path determination module 420, the recognition module 425, the generative neural network 430, the tracking module 435, the mapping module 440, the path modification module 455, and the local path determination module 460 described with reference to FIG. 4 may also apply to the operations of the encoder 515, the global path determination module 520, the recognition module 525, the generative neural network 530, the tracking module 535, the mapping module 540, the path modification module 555, and the local path determination module 560 of FIG. 5.

The generative neural network 530 may be trained to understand traffic laws and identify the intentions of pedestrians and surrounding vehicles based on common sense through training based on an enormous amount of data but may lack detailed driving skills or experience. To improve the ability of understanding and determining driving situations for the generative neural network 530, the autonomous driving device 100 may include a separate memory 570, may perform additional training regarding the driving situations, and may store past driving experience information in the memory 570.

The generative neural network 530 may understand and determine the driving situations by additionally using the past driving experience information stored in the memory 570. The past driving experience information may include driving situation information, behavior information corresponding to the driving situation information, and/or reasoning information for the behavior information. The generative neural network 530 may compare past driving information, stored in the memory 570, similar to a current driving situation of the autonomous driving device 100, and may use it for determination.

More specifically, the encoder 515 may encode the sensor data 510 and may generate encoded sensor data. The encoded sensor data may be a feature vector. The autonomous driving device 100 may generate a query based on the encoded sensor data. The query may be a feature vector including information on a current driving situation. The autonomous driving device 100 may compare the query with the past driving information stored in the memory 570. The autonomous driving device 100 may extract the past driving information that is the most similar to the current driving situation by comparing the query with pieces of driving situation information included in the past driving information stored in the memory 570.

More specifically, the autonomous driving device 100 may calculate similarity (e.g., cosine similarity) between the pieces of driving situation information stored in the memory 570 and the query and may determine driving situation information (e.g., most similar) to be used as an input of the generative neural network 530. The driving situation information to be used as an input of the generative neural network 530 may be referred to as reference driving situation information. For example, the autonomous driving device 100 may determine the driving situation information having the highest similarity with the query to be the reference driving situation information. Alternatively, the autonomous driving device 100 may determine the top n pieces of driving situation information having high similarity with the query to be the reference driving situation information. The autonomous driving device 100 may acquire reference prediction behavior information and reference inference information corresponding to the reference driving situation information and may use them as an input of the generative neural network 530 together with the encoded sensor data.

The autonomous driving device 100 may record event information including disengagement of autonomous driving triggered by action/input a driver (e.g., by manual driving control override) or autonomous driving failures occurring during driving as the past driving experience information in the memory 570. Then, the past driving experience information may be updated asynchronously through reflection.

For example, the reflection may be performed offline in a server. In this process, a system may use counterfactual situations that do not happen in reality. Best reasoning and best behavior may be derived from those assumed situations. Such derived results may be stored in the memory 570 of the autonomous driving device 100 and may be used as the past driving experience information during next driving. The memory 570 may be implemented based on a differential network. The generative neural network 530 may be fixed and only the memory 570 may be trained. For example, the memory 570 may be trained through reinforcement learning from human feedback (RLHF).

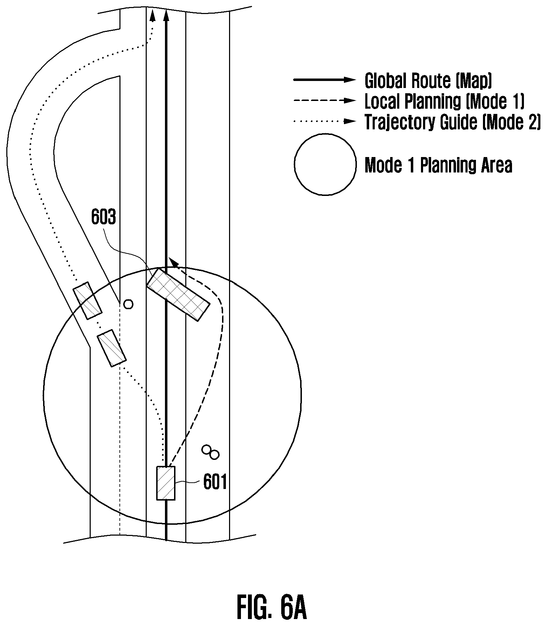

FIG. 6A illustrates an example of determining a driving path according to a data-driven autonomous driving method, according to one or more embodiments.

Referring to FIG. 6A, when a fire truck 603, for example, is parked blocking the road on a global path of an autonomous/ego vehicle 601, and a firefighter is hand-signaling a detour signal to a leftward road/lane (normally not accessible by the autonomous vehicle 601, e.g., a lane normally used for oncoming traffic), FIG. 6A illustrates an expected driving path generated when using only a typical data-driven autonomous driving method (path with long dashed). Referring to FIG. 6A, when using only the typical data-driven autonomous driving method, the current driving situation may not be understood. Thus, the autonomous vehicle 601 may drive along an originally planned path that avoids the fire truck 603 to the right.

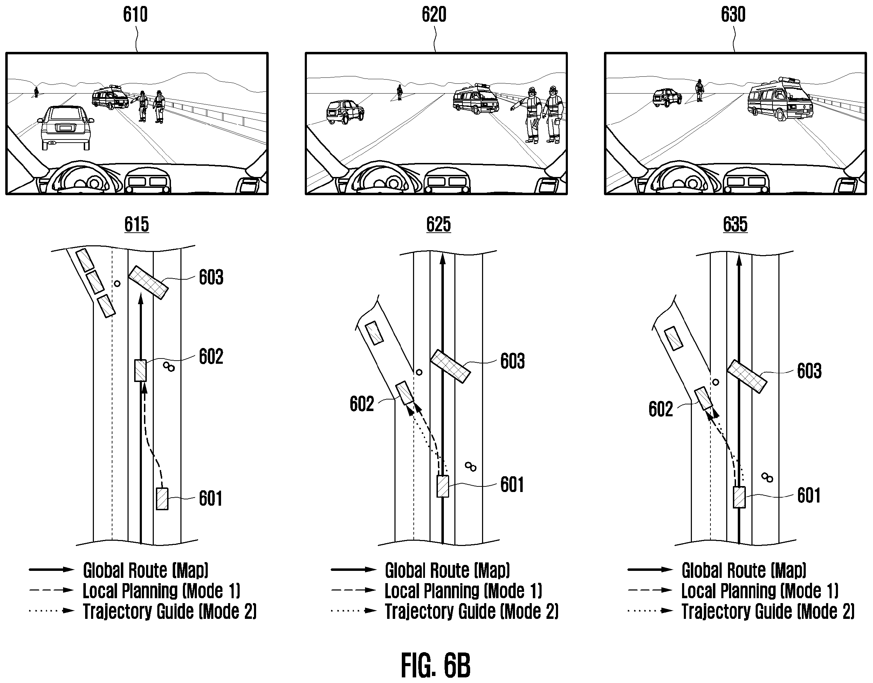

FIG. 6B illustrates an example of determining a driving path according to an autonomous driving method according to one or more embodiments. The description provided with reference to FIGS. 1 to 6A is generally applicable to FIG. 6B.

Referring to FIG. 6B, like FIG. 6A, when a fire truck 603 is parked blocking the road on a global path of an autonomous vehicle 601, and a firefighter is hand-signaling a detour signal to a leftward road/lane (normally not accessible by the autonomous vehicle 601), diagram 610 is an image of a front situation of the autonomous vehicle 601 at a time t(s), and corresponding diagram 615 illustrates an expected driving path of the autonomous vehicle 601 in mode 1 and mode 2 at the time t(s). Diagram 620 is an image of a front situation of the autonomous vehicle 601 at a time (t+0.1)(s), and corresponding diagram 625 illustrates an expected driving path of the autonomous vehicle 601 in mode 1 and mode 2 at the time (t+0.1)(s). Diagram 630 is an image of a front situation of the autonomous vehicle 601 at a time (t+0.1+1/30)(s), and diagram 635 illustrates a corresponding expected driving path of the autonomous vehicle 601 in mode 1 and mode 2 at the time (t+0.1+1/30)(s).

Referring to diagram 615, at the time t, when an image of the fire truck 603 and the firefighter's hand signal are first recognized, the autonomous vehicle 601 may generate a local path (a path from 601 to 602) in a predetermined cycle (e.g., 30 hz) along a global path in mode 1.

Referring to diagram 625, at the time (t+0.1)(s) when 0.1(s), which is cycle 1 of mode 2, has passed from the time t, the autonomous vehicle 601 may generate the global path for the path in mode 1, and the autonomous vehicle 601 may, with mode 2, recognize the situation where the fire truck and the firefighter control the road and guide the detour to the left road through a hand signal and may generate guide information on the path based thereon. The autonomous vehicle 601 may avoid the fire truck and the firefighter by using the guide information on the path and may generate a final path (e.g., by modifying the path of mode 1) following a front vehicle 602.

Referring to diagram 635, at the time (t+1+1/30)(s) when 1/30(s), which is cycle 1 of mode 1, has passed from the time (t+0.1)(s), the autonomous vehicle 601 may continue to avoid the fire truck and the firefighter in mode 1 based on the final path determined at the time (t+0.1)(s) and may generate the final path following the front vehicle 602.

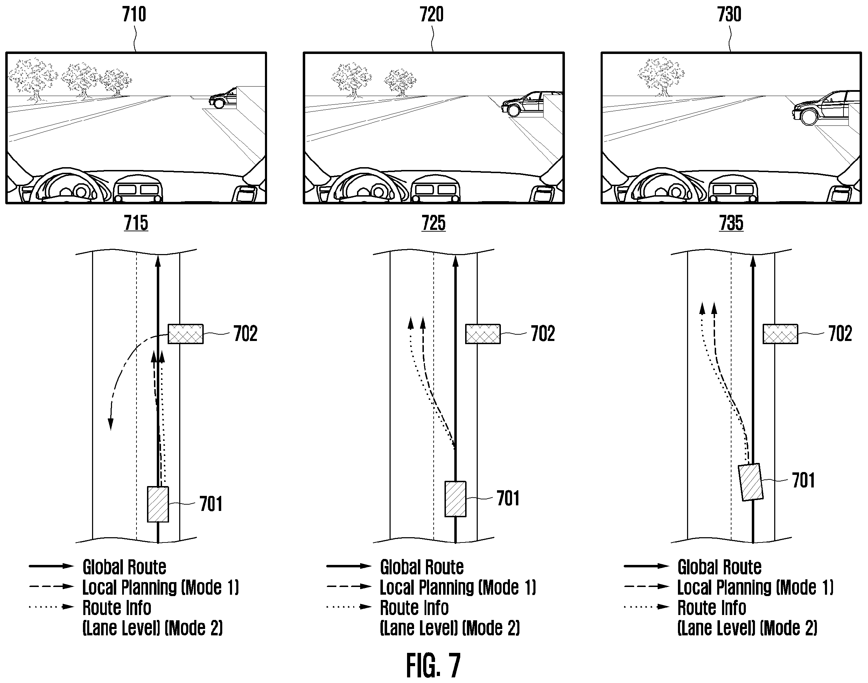

FIG. 7 illustrates an example of determining a driving path according to an autonomous driving method according to one or more embodiments. The description provided with reference to FIGS. 1 to 6B is generally applicable to FIG. 7.

Referring to FIG. 7, when an autonomous vehicle 701 does not know whether a detected other vehicle 702 is parked or is instead about to take the road in a residential area while driving down a narrow alley: diagram 710 is an image of a front situation of the autonomous vehicle 701 at a time t(s), and diagram 715 illustrates a corresponding expected driving path of the autonomous vehicle 701 in mode 1 and mode 2 at the time t(s); diagram 720 is an image of a front situation of the autonomous vehicle 701 at a time (t+0.1)(s), and diagram 725 illustrates a corresponding expected driving path of the autonomous vehicle 701 in mode 1 and mode 2 at the time (t+0.1)(s); diagram 730 is an image of a front situation of the autonomous vehicle 701 at a time (t+0.1+1/30)(s), and diagram 735 illustrates a corresponding expected driving path of the autonomous vehicle 701 in mode 1 and mode 2 at the time (t+0.1+1/30)(s).

Referring to diagram 715, at the time t when the other vehicle 702 is first recognized, in mode 1, the autonomous vehicle 701 may generate a path for driving while reducing the speed such that the other vehicle 702, from the recognition thereof, passes first.

Referring to diagram 725, at the time (t+0.1)(s) when 0.1(s), which is cycle 1 of mode 2, has passed from the time t, the autonomous vehicle 701 may generate a global path for the path in mode 1, and the autonomous vehicle 701 may generate guide information to drive while avoiding the other vehicle 702 by determining the other vehicle 702 is parked because there is no driver therein (which may be inferred by the model(s) of mode 2). The autonomous vehicle 701 may generate a final path for driving while avoiding the other vehicle 702 by using the guide information on the path.

Referring to diagram 735, at the time (t+1+1/30)(s) when 1/30(s), which is cycle 1 of mode 1, has passed from the time (t+0.1)(s), the autonomous vehicle 701 may generate a final path for continuing to drive while avoiding the other vehicle 702 in mode 1 based on the final path determined at the time (t+0.1)(s).

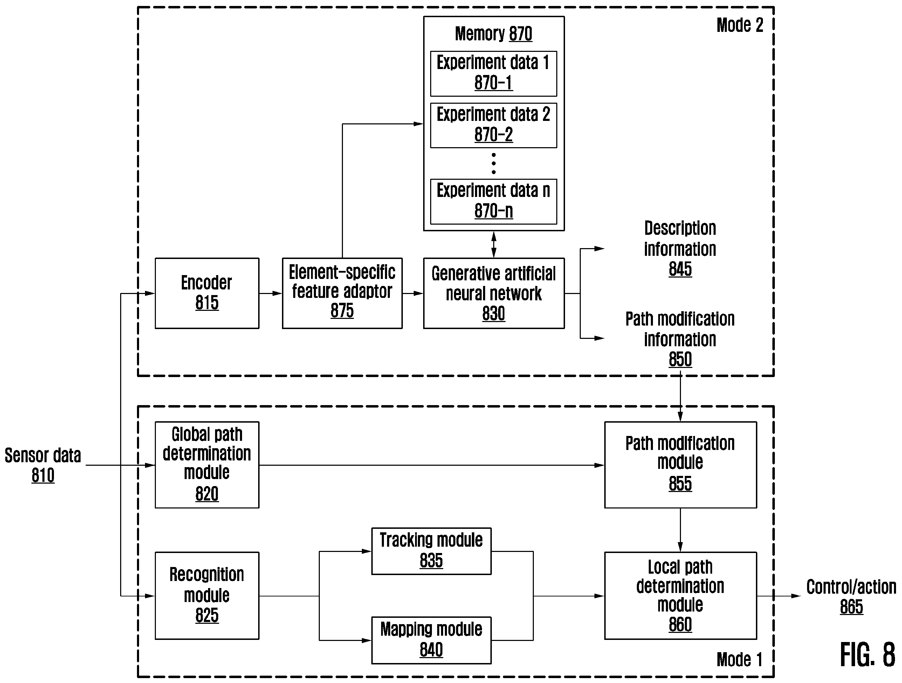

FIG. 8 illustrates another example of an operating method of the autonomous driving device according to one or more embodiments.

Referring to FIG. 8, the autonomous driving device 100, In one or more embodiments, may include an encoder 815, a global path determination module 820, a recognition module 825, a generative neural network 830, a tracking module 835, a mapping module 840, a path modification module 855, a local path determination module 860, a memory 870, and an element-specific feature adaptor 875. The description provided with reference to FIGS. 1 to 7 is generally applicable to FIG. 8. For example, the operations of the encoder 515, the global path determination module 520, the recognition module 525, the generative neural network 530, the tracking module 535, the mapping module 540, the path modification module 555, the local path determination module 560, and the memory 570 described with reference to FIG. 5 may also apply to the operations of the encoder 815, the global path determination module 820, the recognition module 825, the generative neural network 830, the tracking module 835, the mapping module 840, the path modification module 855, the local path determination module 860, and the memory 870 of FIG. 8.

The autonomous driving device 100 may add compositional generalization such that the generative neural network 830 has higher causality and generalization capabilities. The element-specific feature adaptor 875 may convert encoded sensor data received from the encoder 815 into a component-level representation (components are discussed below) and may store it in a memory. The generative neural network 830 may further include a self-organizing causal intelligence model. The self-organizing causal artificial intelligence model may divide information on recognized objects and situations into component levels and may reconstruct current experience based on causal relationships between pieces of experience information stored in the memory 870. By doing so, the autonomous driving device 100 may learn causal reasoning with a small amount of data and may secure a human-level compositional generalization capability by self-organizing a causal structure to respond to new situations.

More specifically, the autonomous driving device 100 may extract element-specific feature vectors (e.g., a language feature vector, a traffic law feature vector, an object color feature vector, an object shape feature vector, an object texture feature vector, an acceleration and deceleration feature vector) having various spatiotemporal information in a driving scene through the encoder 815. The element-specific feature adaptor 875 may acquire component feature data by converting the element-specific feature vectors into a feature space.

The memory 870 may manage long-term and short-term experience data including various temporal sensory information. The memory 870 may store experience data by dividing the experience data into components. For example, the memory 870 may store a plurality of experience data 870-1 to 870-n, and each piece of experience data may include experience data by each component. For example, each of the plurality of experience data 870-1 to 870-n may divide and store at least one of visual experience data, language experience data, and behavioral experience data.

The self-organizing causal artificial intelligence model of the generative neural network 830 may learn causal relationships of the element-specific feature vectors to learn structural inductive bias robust to interventions of multi-sensory sensor data. The self-organizing causal artificial intelligence model may store the causal relationships of the element-specific feature vectors by using the structure of the memory 870 and may perform read/update. The self-organizing causal artificial intelligence model may be trained to respond to new situations (which may be expressed by a combination of existing knowledge) not included in training data for driving by combining past driving experience information read from the memory 870 with current driving situation knowledge (e.g., new element-specific feature vectors). The self-organizing causal artificial intelligence model may secure the human-level generalization capability by training the self-organizing process of the causal structure and may solve the hallucination problem of an LLM.

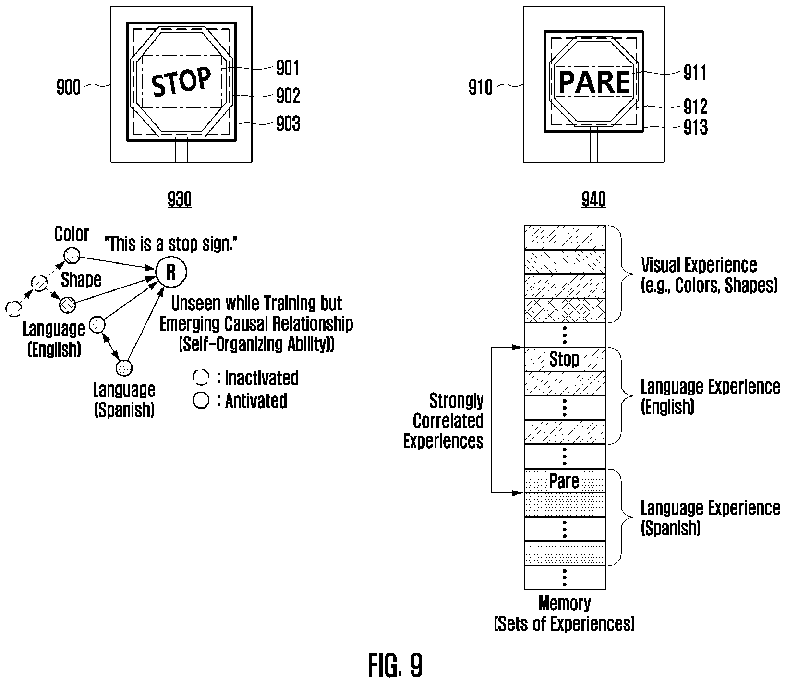

The autonomous driving device 100 may determine element-specific query data based on the component feature data. The autonomous driving device 100 may transmit the element-specific query data to the memory 870 and may acquire element-specific experience data corresponding to the element-specific query data from the memory 870. The autonomous driving device 100 may input the component feature data and the element-specific experience data into the generative neural network 830 and may acquire the guide information. The detailed operation of the self-organizing causal artificial intelligence model is described below with reference to FIG. 9.

FIG. 9 illustrates an example of compositional generalization according to one or more embodiments. The description provided with reference to FIGS. 1 to 8 is generally applicable to FIG. 9.

Referring to FIG. 9, if a STOP sign 900 in English is recognized in training, the autonomous driving device 100 may store the STOP sign 900 by dividing it into a language 901, a color 902, and a shape 903 (component levels). When a self-organizing causal intelligence model detects a PARE sign 910 in Spanish, it is recognized as a sign referring to STOP even though the PARE sign 910 in Spanish is not included in training data.

More specifically, referring to diagram 930, the element-specific feature adaptor 875 may convert the STOP sign 900 in English into component levels (the language 901, the color 902, and the shape 903) and store them in the memory 870. Referring to diagram 940, the self-organizing causal intelligence model may divide the PARE sign 910 in Spanish into component levels (a language 911, a color 912, and a shape 913) and may reconstruct current experience based on causal relationships between pieces of experience information stored in the memory 870. For example, the color 912 and the shape 913 of the PARE sign 910 are the same as the color 902 and the shape 903 of the pre-trained STOP sign 900, but the language 911 of the PARE sign 910 is different from the language 901 of the STOP sign 900. Thus, the PARE sign 910 may not be recognized as a sign referring to STOP. However, since the self-organizing causal intelligence model learns the causal relationships between the element-specific feature vectors, the self-organizing causal intelligence model may determine that there is a causal relationship between the language 911 of the PARE sign 910 and the language 901 of the STOP sign 900 and may recognize the PARE sign 910 as a sign referring to STOP.

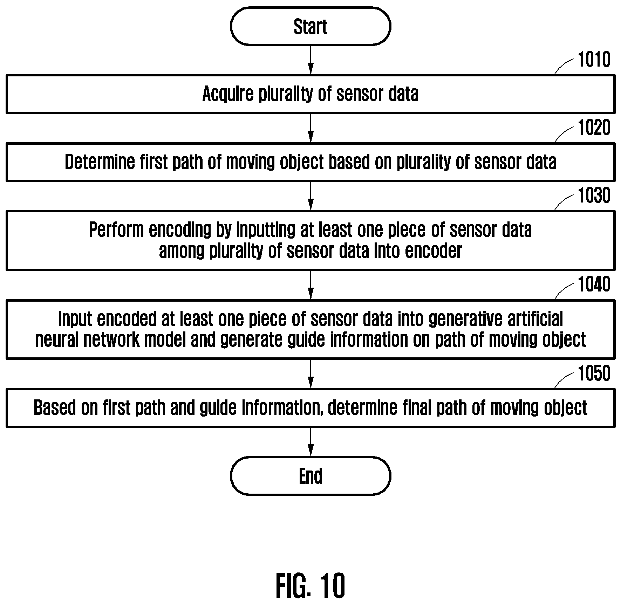

FIG. 10 illustrates an example of a path determination method according to one or more embodiments. The description provided with reference to FIGS. 1 to 9 is generally applicable to FIG. 10. Operations 1010 to 1050 may be performed by using the autonomous driving device 100 illustrated in FIG. 2. In operation 1010, the autonomous driving device 100 may acquire a plurality of sensor data. For example, the autonomous driving device 100 may acquire at least one sensor data 410 from the image sensor 121, the depth camera 122, the LiDAR unit 123, the RADAR unit 124, the infrared sensor 125, the laser sensor 126, the GPS 127, the geomagnetic sensor 128, and the acceleration sensor 129.

In operation 1020, the autonomous driving device 100 may determine a first path of a moving object based on the plurality of sensor data. The autonomous driving device 100 may determine a first path by performing the operation of mode 1.

In operation 1030, the autonomous driving device 100 may perform encoding by inputting at least one piece of sensor data among the plurality of sensor data into an encoder (e.g., the encoder 415 of FIG. 4). The encoder of the autonomous driving device 100 may encode the sensor data 510 to be suitable for an input of the generative neural network model 530.

In operation 1040, the autonomous driving device 100 may input the encoded at least one piece of sensor data into a generative neural network model and generate guide information on a path of the moving object. The autonomous driving device 100 may generate a query based on the encoded sensor data. The query may be a feature vector including information on a current driving situation. For example, the query may be "Query {Situation: there is a fork ahead and a fire truck is parked in reverse. A traffic controller is waving an orange flag and signaling to the left. Both a black SUV and a white SUV ahead are driving to the left of the fork.}". The quoted situation information of the query is given in natural language form in the foregoing example, however, this is for ease of description; in practice, the query may be in the form of a feature vector.

The autonomous driving device 100 may acquire reference driving situation information, reference predicted behavior information, and reference inference information corresponding to the query by calculating similarity between the query and driving situation information stored in a memory (e.g., the memory 570 of FIG. 5). For example, the autonomous driving device 100 may acquire the reference driving situation information, the reference predicted behavior information, and the reference inference information, such as "Experience {Scene Description: there is a fork ahead and a dump truck is parked blocking the road. A traffic controller next to the dump truck is waving an orange flag and signaling to the left. Vehicles are waiting in the opposite lane and a white passenger car ahead is driving slowly to the left of the fork. Best Reasoning: Since the straight road ahead is under control, drive slowly to the left of the fork following the white passenger car ahead. Best Behavior: drive slowly to the left of the fork following the signaling}".

The autonomous driving device 100 may acquire reference prediction behavior information and reference inference information corresponding to the reference driving situation information and may use them as an input of the generative neural network 530 together with the encoded sensor data. The generative neural network 530 receiving the data may generate description information (e.g., the description information 445 of FIG. 4) and path modification information (e.g., the path modification information 450 of FIG. 4). For example, the description information may be "Explanation {Situation: there is a fork ahead and a fire truck is parked in reverse. A traffic controller is waving an orange flag and signaling to the left. Both a black SUV and a white SUV ahead are driving to the left of the fork. Reasoning: Since the straight road ahead is under control, drive slowly to the left of the fork following the signaling. Behavior: drive slowly to the left of the fork following the signaling.}". The path modification information 450 may include recommended path information, like {(1.1, -1.9, 30.0), (4.1, -4.6, 30.0), (18.4, -7.2, 30.0), ... }, representing the position of the center point of a lane according to time in three dimensions.

In operation 1050, based on the first path and the guide information, the autonomous driving device 100 may determine a final path of a moving object. If there is path modification information, the autonomous driving device 100 may determine the final path by modifying a global path generated in a global path determination module based on the path modification information or by modifying a local path by transmitting the path modification information to a local path determination module (without necessarily modifying the global path). If there is no path modification information generated through mode 2 (e.g., if the autonomous driving device 100 operates only in mode 1 without the intervention of mode 2), the path modification module 455 may determine a local path determined by transmitting (passing-through) the global path generated in the global path determination module to the local path determination module to be the final path.

In any of the electronic devices described above with an encoder, the encoder may be trained to generate the guide information by the generative neural network model receiving the encoded at least one piece of sensor data.

Any of the electronic devices described above may be configured to determine a query based on an encoding of at least one piece of sensor data, and acquire experience data corresponding to the query from a memory.

In any of the electronic devices described above, memory thereof may be configured to (i) store driving situation information, behavior information corresponding to the driving situation information, and reasoning information for the behavior information, (ii) compare the query with the driving situation information stored by the memory and acquire current driving situation information, and (iii) acquire current prediction behavior information and current reasoning information corresponding to the current driving situation information.

Any of the electronic devices described above may input an encoding of at least one piece of sensor data and experience data into a generative neural network model to acquire the guide information.

In any of the electronic devices described above, memory thereof may: store experience data by dividing the experience data into components, acquire element-specific feature vectors based on the encoded at least one piece of sensor data, acquire component feature data by converting the element-specific feature vectors into a feature space, determine element-specific query data based on the component feature data, and transmit the element-specific query data to the memory and acquire element-specific experience data corresponding to the element-specific query data.

In any of the electronic devices described above, component feature data and element-specific experience data may be inputted into a generative neural network model to acquire the guide information, where the generative neural network model has learned a causal relationship between the element-specific feature vectors.

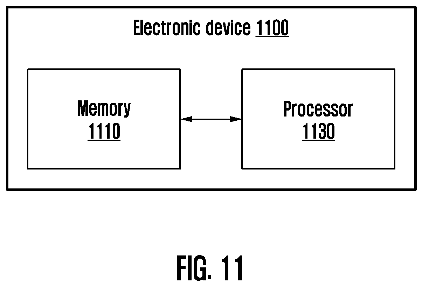

FIG. 11 illustrates an example of an electronic device according to one or more embodiments.

An electronic device 1100 may include a memory 1110 and a processor 1130. The electronic device 1100 may be used to implement the autonomous driving device 100 of FIGS. 1 and 2. The memory 1110 may include the storage 130 of FIG. 2. The processor 1130 may be the processor 140 of FIG. 2.

The memory 1110 may store instructions (e.g., programs) executable by the processor 1130. For example, the instructions may include instructions for executing an operation of the processor 1130 and/or an operation of each component of the processor 1130.

The memory 1110 may be implemented as a volatile memory device or a non-volatile memory device.

The volatile memory device may be implemented as dynamic RAM (DRAM), static RAM (SRAM), thyristor RAM (T-RAM), zero capacitor RAM (Z-RAM), or twin transistor RAM (TTRAM).

The non-volatile memory device may be implemented as an electrically erasable programmable ROM (EEPROM), a flash memory, a magnetic RAM (MRAM), a spin-transfer torque-MRAM (STT-MRAM), a conductive bridging RAM (CBRAM), a ferroelectric RAM (FeRAM), a phase change RAM (PRAM), a resistive RAM (RRAM), a nanotube RRAM, a polymer RAM (PoRAM), a nano-floating gate memory (NFGM), a holographic memory, a molecular electronic memory device, or an insulator resistance change memory.

The processor 1130 may process data stored in the memory 1110. The processor 1130 may execute computer-readable code (e.g., software) stored in the memory 1110 and instructions triggered by the processor 1130.

The processor 1130 may be a hardware-implemented data processing device having a circuit that is physically structured to execute desired operations. For example, the desired operations may include code or instructions in a program.

For example, the hardware-implemented data processing device may include a microprocessor, a CPU, a processor core, a multi-core processor, a multiprocessor, an ASIC, and an FPGA.

The autonomous driving device 100 of FIGS. 1 and 2 may be stored in the memory 1110 and executed by the processor 1130 or embedded in the processor 1130. The processor 1130 may perform the operation of the autonomous driving device 100 described with reference to FIGS. 1 to 10 in substantially the same manner. Accordingly, further description thereof is omitted herein.

The examples described herein may be implemented by using a hardware component, a software component, and/or a combination thereof. A processing device may be implemented using one or more general-purpose or special-purpose computers, such as, for example, a processor, a controller and an arithmetic logic unit (ALU), a DSP, a microcomputer, an FPGA, a programmable logic unit (PLU), a microprocessor, or any other device capable of responding to and executing instructions in a defined manner. The processing device may run an operating system (OS) and one or more software applications that run on the OS. The processing unit also may access, store, manipulate, process, and generate data in response to execution of the software. For purpose of simplicity, the description of a processing unit is used as singular; however, one skilled in the art will appreciate that a processing unit may include multiple processing elements and multiple types of processing elements. For example, a processing device may include multiple processors or a processor and a controller. In addition, different processing configurations are possible, such as parallel processors.

The software may include a computer program, a piece of code, an instruction, or combinations thereof, to independently or uniformly instruct or configure the processing device to operate as desired. Software and data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described embodiments. The media may also include, alone or in combination with the program instructions, data files, data structures, and the like. The program instructions recorded on the media may be those specially designed and constructed for the purposes of example embodiments, or they may be of the kind well-known and available to those having skill in the computer software arts. Examples of non-transitory computer-readable media include magnetic media such as hard disks, floppy disks, and magnetic tape; optical media such as CD-ROM discs and DVDs; magneto-optical media such as optical discs; and hardware devices that are specially configured to store and perform program instructions, such as ROM, RAM, flash memory, and the like. Examples of program instructions include both machine code, such as produced by a compiler, and files containing higher-level code that may be executed by the computer using an interpreter.

The computing apparatuses, the vehicles, the electronic devices, the processors, the memories, the image sensors, the vehicle/operation function hardware, the autonomous/assisted driving systems, the displays, the information output system and hardware, the storage devices, and other apparatuses, devices, units, modules, and components described herein with respect to FIGS. 1-11 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-11 that perform the operations described in this application are performed by computing hardware, for example, by one or more processors or computers, implemented as described above implementing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

## Claims

1. A method of determining a final path of a moving object, the method comprising:
acquiring pieces of sensor data;
repeatedly determining a first path of the moving object with a first frequency, based on the pieces of sensor data;
repeatedly determining, with a second frequency lower than the first frequency, whether to generate path modification information; and
in response to determining to generate the path modification information, determining the final path of the moving object by modifying the first path based on the path modification information,
wherein the repeatedly determining whether to generate path modification information comprises:
inputting at least one piece of sensor data among the pieces of sensor data into an encoder that encodes the at least one piece of sensor data;
inputting the encoded at least one piece of sensor data into a generative neural network model to determine whether the path modification information is to be generated.

2. The method of claim 1, wherein the determining the first path comprises:
determining a global path of the moving object based on the at least one piece of sensor data among the pieces of sensor data;
recognizing and tracking a moving element of a surrounding environment of the moving object based on the at least one piece of sensor data among the pieces of sensor data, and generating map information; and
determining a local path of the moving object based on the moving element, the map information, and the global path.

3. The method of claim 2, wherein the determining the final path comprises:
modifying the local path based on the path modification information to determine the final path.

4. The method of any one of the previous claims, wherein a default prompt is set for the generative neural network model to output the path modification information.

5. The method of any one of the previous claims, wherein the encoding the at least one piece of sensor data comprises:
acquiring encoded results corresponding respectively to the pieces of sensor data, and
concatenating the encoded results to generate the encoded at least one piece of sensor data;
and/or wherein the encoder is trained to generate the path modification information by the generative neural network model receiving the encoded at least one piece of sensor data.

6. The method of any one of the previous claims, further comprising:
determining a query based on the encoded at least one piece of sensor data; and
acquiring experience data corresponding to the query from a memory.

7. The method of claim 6, wherein the memory
stores past driving experience information comprising driving situation information, behavior information corresponding to the driving situation information, and reasoning information for the behavior information, and
the acquiring the experience data comprises:
comparing the query with the driving situation information stored by the memory and acquiring reference driving situation information corresponding to a current driving situation, and
acquiring reference prediction behavior information and reference reasoning information corresponding to the reference driving situation information;
and/or wherein the repeatedly determining whether to generate the path modification information comprises inputting the encoded at least one piece of sensor data and the experience data into the generative neural network model which infers the path modification information therefrom.

8. The method of claims 6 or 7, wherein the memory stores the experience data by dividing the experience data into components, and
the determining the query comprises:
acquiring element-specific feature vectors based on the encoded at least one piece of sensor data,
acquiring component feature data by converting the element-specific feature vectors into a feature space, and
determining element-specific query data based on the component feature data,
and
the acquiring the experience data comprises:
transmitting the element-specific query data to the memory and acquiring element-specific experience data corresponding to the element-specific query data; and
preferably, wherein the repeatedly determining whether to generate the path modification information comprises:
inputting the component feature data and the element-specific experience data into the generative neural network model which infers the path modification information therefrom,
wherein the generative neural network model has learned a causal relationship between the element-specific feature vectors.

9. The method of any one of the previous claims, further comprising:
storing, in a memory, past driving experience information comprising driving situation information, behavior information corresponding to the driving situation information, and reasoning information for the behavior information.

10. A storage medium storing computer instructions for executing the method of any one of the previous claims.

11. An electronic device comprising:
one or more processors; and
a memory storing instructions,
wherein the instructions, when executed individually or collectively by the at least one processor, are configured to cause the one or more processors to:
repeatedly determine a first path of a moving object with a first frequency, based on pieces of sensor data,
repeatedly determine, with a second frequency lower than the first frequency, whether to generate path modification information; and
in response to determining to generate the path modification information, determine the final path of the moving object by modifying the first path based on the path modification information,
wherein the repeatedly determining whether to generate path modification information comprises:
inputting at least one piece of sensor data among the pieces of sensor data into an encoder that encodes the at least one piece of sensor data,
inputting the encoded at least one piece of sensor data into a generative neural network model to determine whether the path modification information is to be generated.

12. The electronic device of claim 11, wherein the instructions are further configured to cause the one or more processors to
determine a global path of the moving object based on the at least one piece of sensor data among the pieces of sensor data,
recognize and track a moving element of a surrounding environment of the moving object based on the at least one piece of sensor data among the pieces of sensor data, and generate map information, and
determine a local path of the moving object based on the moving element, the map information, and the global path.

13. The electronic device of claim 12, wherein the instructions are further configured to cause the one or more processors to
modify the local path based on the path modification information to determine the final path.

14. The electronic device of any one of claims 11-13, wherein a default prompt is set for the generative neural network model to output the path modification information;
and/or wherein the instructions are further configured to cause the one or more processors to:
acquire encoded results corresponding respectively to the pieces of sensor data, and
concatenate the encoded results to generate the encoded at least one piece of sensor data.

## Patentansprüche

1. Verfahren zum Bestimmen eines endgültigen Pfades eines sich bewegenden Objekts, wobei das Verfahren Folgendes umfasst:
Erhalten von einzelnen Sensordaten;
wiederholtes Bestimmen eines ersten Pfades des sich bewegenden Objekts mit einer ersten Frequenz, basierend auf den einzelnen Sensordaten;
wiederholtes Bestimmen, ob Pfadmodifikationsinformationen erzeugt werden sollen, mit einer zweiten Frequenz, die niedriger als die erste Frequenz ist; und
als Reaktion auf das Bestimmen, die Pfadmodifikationsinformationen zu erzeugen, Bestimmen des endgültigen Pfades des sich bewegenden Objekts durch Modifizieren des ersten Pfades basierend auf den Pfadmodifikationsinformationen,
wobei das wiederholte Bestimmen, ob Pfadmodifikationsinformationen erzeugt werden sollen, Folgendes umfasst:
Eingeben mindestens eines Sensordatums unter den einzelnen Sensordaten in einen Codierer, der das mindestens eine Sensordatum kodiert;
Eingeben des codierten mindestens einen Sensordatums in ein generatives neuronales Netzwerkmodell, um zu bestimmen, ob die Pfadmodifikationsinformationen erzeugt werden sollen.

2. Verfahren nach Anspruch 1, wobei das Bestimmen des ersten Pfades Folgendes umfasst:
Bestimmen eines globalen Pfades des sich bewegenden Objekts basierend auf dem mindestens einen Sensordatum unter den einzelnen Sensordaten;
Erkennen und Verfolgen eines sich bewegenden Elements einer Umgebung des sich bewegenden Objekts basierend auf dem mindestens einen Sensordatum unter den einzelnen Sensordaten, und Erzeugen von Karteninformationen; und
Bestimmen eines lokalen Pfades des sich bewegenden Objekts basierend auf dem sich bewegenden Element, den Karteninformationen und dem globalen Pfad.

3. Verfahren nach Anspruch 2, wobei das Bestimmen des endgültigen Pfades Folgendes umfasst:
Modifizieren des lokalen Pfades basierend auf den Pfadmodifikationsinformationen, um den endgültigen Pfad zu bestimmen.

4. Verfahren nach einem der vorhergehenden Ansprüche, wobei eine Standardaufforderung für das generative neuronale Netzwerkmodell eingestellt ist, um die Pfadmodifikationsinformationen auszugeben.

5. Verfahren nach einem der vorhergehenden Ansprüche, wobei das Codieren des mindestens einen Sensordatums Folgendes umfasst:
Erhalten codierter Ergebnisse, die jeweils den einzelnen Sensordaten entsprechen, und
Verketten der codierten Ergebnisse, um das codierte mindestens eine Sensordatum zu erzeugen;
und/oder wobei der Codierer trainiert ist, um die Pfadmodifikationsinformationen durch das generative neuronale Netzwerkmodell zu erzeugen, das das codierte mindestens eine Sensordatum empfängt.

6. Verfahren nach einem der vorhergehenden Ansprüche, das ferner Folgendes umfasst:
Bestimmen einer Abfrage basierend auf dem codierten mindestens einen Sensordatum; und
Erhalten von Erfahrungsdaten, die der Abfrage entsprechen, aus einem Speicher.

7. Verfahren nach Anspruch 6, wobei der Speicher vergangene Fahrerfahrungsinformationen speichert, die Fahrsituationsinformationen, den Fahrsituationsinformationen entsprechende Verhaltensinformationen und Begründungsinformationen für die Verhaltensinformationen umfassen, und
das Erhalten der Erfahrungsdaten Folgendes umfasst:
Vergleichen der Abfrage mit den in dem Speicher gespeicherten Fahrsituationsinformationen und Erhalten von Referenzfahrsituationsinformationen, die einer aktuellen Fahrsituation entsprechen, und
Erhalten von Referenzvorhersageverhaltensinformationen und den Referenzfahrsituationsinformationen entsprechenden Referenzbegründungsinformationen;
und/oder wobei das wiederholte Bestimmen, ob die Pfadmodifikationsinformationen erzeugt werden sollen, das Eingeben des codierten mindestens einen Sensordatums und der Erfahrungsdaten in das generative neuronale Netzwerkmodell umfasst, das daraus die Pfadmodifikationsinformationen ableitet.

8. Verfahren nach Anspruch 6 oder 7, wobei der Speicher die Erfahrungsdaten speichert, indem die Erfahrungsdaten in Komponenten geteilt werden, und
das Bestimmen der Abfrage Folgendes umfasst:
Erhalten von elementspezifischen Merkmalsvektoren basierend auf dem codierten mindestens einen Sensordatum,
Erhalten von Komponentenmerkmalsdaten durch Konvertieren der elementspezifischen Merkmalsvektoren in einen Merkmalsraum, und
Bestimmen von elementspezifischen Abfragedaten basierend auf den Komponentenmerkmalsdaten, und
das Erhalten der Erfahrungsdaten Folgendes umfasst:
Übertragen der elementspezifischen Abfragedaten an den Speicher und Erhalten von elementspezifischen Erfahrungsdaten, die den elementspezifischen Abfragedaten entsprechen; und
vorzugsweise, wobei das wiederholte Bestimmen, ob die Pfadmodifikationsinformationen erzeugt werden sollen, Folgendes umfasst:
Eingeben der Komponentenmerkmalsdaten und der elementspezifischen Erfahrungsdaten in das generative neuronale Netzwerkmodell, das daraus die Pfadmodifikationsinformationen ableitet,
wobei das generative neuronale Netzwerkmodell eine kausale Beziehung zwischen den elementspezifischen Merkmalsvektoren gelernt hat.

9. Verfahren nach einem der vorhergehenden Ansprüche, das ferner Folgendes umfasst:
Speichern vergangener Fahrerfahrungsinformationen, die Fahrsituationsinformationen, den Fahrsituationsinformationen entsprechende Verhaltensinformationen und Begründungsinformationen für die Verhaltensinformationen umfassen, in einem Speicher.

10. Speichermedium, auf dem Computeranweisungen zum Ausführen des Verfahrens nach einem der vorhergehenden Ansprüche gespeichert sind.

11. Elektronische Vorrichtung, die Folgendes umfasst:
einen oder mehrere Prozessoren; und
einen Speicher, in dem Anweisungen gespeichert sind,
wobei die Anweisungen, wenn sie einzeln oder gemeinsam von dem mindestens einen Prozessor ausgeführt werden, konfiguriert sind, um den einen oder die mehreren Prozessoren zu Folgendem zu veranlassen:
wiederholtes Bestimmen eines ersten Pfades eines sich bewegenden Objekts mit einer ersten Frequenz, basierend auf einzelnen Sensordaten,
wiederholtes Bestimmen, ob Pfadmodifikationsinformationen erzeugt werden sollen, mit einer zweiten Frequenz, die niedriger als die erste Frequenz ist; und
als Reaktion auf das Bestimmen, die Pfadmodifikationsinformationen zu erzeugen, Bestimmen des endgültigen Pfades des sich bewegenden Objekts durch Modifizieren des ersten Pfades basierend auf den Pfadmodifikationsinformationen,
wobei das wiederholte Bestimmen, ob Pfadmodifikationsinformationen erzeugt werden sollen, Folgendes umfasst:
Eingeben mindestens eines Sensordatums unter den einzelnen Sensordaten in einen Codierer, der das mindestens eine Sensordatum codiert,
Eingeben des codierten mindestens einen Sensordatums in ein generatives neuronales Netzwerkmodell, um zu bestimmen, ob die Pfadmodifikationsinformationen erzeugt werden sollen.

12. Elektronische Vorrichtung nach Anspruch 11, wobei die Anweisungen ferner konfiguriert sind, um den einen oder die mehreren Prozessoren zu Folgendem zu veranlassen:
Bestimmen eines globalen Pfades des sich bewegenden Objekts basierend auf dem mindestens einen Sensordatum unter den einzelnen Sensordaten,
Erkennen und Verfolgen eines sich bewegenden Elements einer Umgebung des sich bewegenden Objekts basierend auf dem mindestens einen Sensordatum unter den einzelnen Sensordaten, und Erzeugen von Karteninformationen, und
Bestimmen eines lokalen Pfades des sich bewegenden Objekts basierend auf dem sich bewegenden Element, den Karteninformationen und dem globalen Pfad.

13. Elektronische Vorrichtung nach Anspruch 12, wobei die Anweisungen ferner konfiguriert sind, um den einen oder die mehreren Prozessoren zu Folgendem zu veranlassen:
Modifizieren des lokalen Pfades basierend auf den Pfadmodifikationsinformationen, um den endgültigen Pfad zu bestimmen.

14. Elektronische Vorrichtung nach einem der Ansprüche 11 bis 13, wobei eine Standardaufforderung für das generative neuronale Netzwerkmodell eingestellt ist, um die Pfadmodifikationsinformationen auszugeben;
und/oder wobei die Anweisungen ferner konfiguriert sind, um den einen oder die mehreren Prozessoren zu Folgendem zu veranlassen:
Erhalten codierter Ergebnisse, die jeweils den einzelnen Sensordaten entsprechen, und
Verketten der codierten Ergebnisse, um das codierte mindestens eine Sensordatum zu erzeugen.

## Revendications

1. Procédé de détermination de la trajectoire finale d'un objet en mouvement, le procédé comprenant :
l'acquisition de données individuelles de capteurs,
la détermination, à plusieurs reprises, d'une première trajectoire de l'objet en mouvement avec une première fréquence, en fonction des données individuelles de capteurs,
la détermination, à plusieurs reprises, avec une deuxième fréquence inférieure à la première fréquence, de la nécessité ou non de générer des informations de modification de trajectoire, et
en réaction à la détermination de la nécessité de générer les informations de modification de trajectoire, la détermination de la trajectoire finale de l'objet en mouvement par modification de la première trajectoire en fonction des informations de modification de trajectoire ;
ladite détermination effectuée à plusieurs reprises de la nécessité ou non de générer des informations de modification de trajectoire comprenant :
l'introduction d'au moins une donnée individuelle de capteurs parmi les données individuelles de capteurs dans un encodeur qui encode ladite au moins une donnée individuelle de capteurs,
l'introduction de l'au moins une donnée individuelle de capteurs encodée dans un modèle de réseau neuronal génératif afin de déterminer si les informations de modification de trajectoire doivent être générées.

2. Procédé selon la revendication 1, dans lequel la détermination de la première trajectoire comprend :
la détermination d'une trajectoire globale de l'objet en mouvement en fonction de l'au moins une donnée individuelle de capteurs parmi les données individuelles de capteurs,
la reconnaissance et le suivi d'un élément en mouvement dans l'environnement de l'objet en mouvement en fonction de l'au moins une donnée individuelle de capteurs parmi les données individuelles de capteurs, et la génération d'informations cartographiques, et
la détermination d'une trajectoire locale de l'objet en mouvement en fonction de l'élément en mouvement, des informations cartographiques et de la trajectoire globale.

3. Procédé selon la revendication 2, dans lequel la détermination de la trajectoire finale comprend :
la modification de la trajectoire locale en fonction des informations de modification de trajectoire pour déterminer la trajectoire finale.

4. Procédé selon l'une quelconque des revendications précédentes, dans lequel une invite par défaut est définie pour que le modèle de réseau neuronal génératif produise les informations de modification de trajectoire.

5. Procédé selon l'une quelconque des revendications précédentes, dans lequel l'encodage de l'au moins une donnée individuelle de capteurs comprend :
l'acquisition de résultats encodés correspondant respectivement aux données individuelles de capteurs, et
la concaténation des résultats encodés pour générer l'au moins une donnée individuelle de capteurs encodée ;
et/ou dans lequel l'encodeur est entraîné à faire générer les informations de modification de trajectoire par le modèle de réseau neuronal génératif lorsque ce dernier reçoit l'au moins une donnée individuelle de capteurs encodée.

6. Procédé selon l'une quelconque des revendications précédentes, comprenant en outre :
la détermination d'une requête en fonction de l'au moins une donnée individuelle de capteurs encodée, et
l'acquisition de données d'expérience correspondant à la requête en provenance d'une mémoire.

7. Procédé selon la revendication 6, dans lequel la mémoire contient des informations d'expérience de conduite passée comprenant des informations de situation de conduite, des informations comportementales correspondant auxdites informations de situation de conduite et des informations de raisonnement propres aux informations comportementales, et
l'acquisition des données d'expérience comprend :
la comparaison de la requête aux informations de situation de conduite contenues dans la mémoire et l'acquisition d'informations de situation de conduite de référence correspondant à une situation de conduite en cours, et
l'acquisition d'informations comportementales de prédiction de référence et d'informations de raisonnement de référence correspondant aux informations de situation de conduite de référence ;
et/ou dans lequel la détermination répétée de la nécessité de générer les informations de modification de trajectoire comprend l'introduction de l'au moins une donnée individuelle de capteurs encodée et des données d'expérience dans le modèle de réseau neuronal génératif qui en déduit les informations de modification de trajectoire.

8. Procédé selon les revendications 6 ou 7, dans lequel les données d'expérience sont stockées dans la mémoire en étant divisées en composantes, et
la détermination de la requête comprend :
l'acquisition de vecteurs caractéristiques spécifiques à l'élément en fonction de l'au moins une donnée individuelle de capteurs encodée,
l'acquisition de données caractéristiques de composantes par conversion des vecteurs caractéristiques spécifiques à l'élément en un espace caractéristique, et
la détermination de données de requête spécifiques à l'élément en fonction des données caractéristiques de composantes ; et
l'acquisition des données d'expérience comprend :
la transmission des données de requête spécifiques à l'élément à la mémoire et l'acquisition de données d'expérience spécifiques à l'élément correspondant aux données de requête spécifiques à l'élément ; et
dans lequel la détermination effectuée à plusieurs reprises de la nécessité de générer les informations de modification de trajectoire comprend de préférence :
l'introduction des données caractéristiques de composantes et des données d'expérience spécifiques à l'élément dans le modèle de réseau neuronal génératif qui en déduit les informations de modification de trajectoire ;
ledit modèle de réseau neuronal génératif ayant appris une relation causale entre les vecteurs caractéristiques spécifiques aux éléments.

9. Procédé selon l'une quelconque des revendications précédentes, comprenant en outre :
le stockage, dans une mémoire, d'informations d'expérience de conduite passée comprenant des informations de situation de conduite, des informations comportementales correspondant auxdites informations de situation de conduite et des informations de raisonnement propres aux informations comportementales.

10. Support de stockage sur lequel sont stockées des instructions informatiques permettant l'exécution du procédé selon l'une quelconque des revendications précédentes.

11. Dispositif électronique comprenant :
un ou plusieurs processeurs, et
une mémoire dans laquelle sont stockées des instructions ;
lesdites instructions, lorsqu'elles sont exécutées individuellement ou collectivement par l'au moins un processeur, étant conçues pour amener le ou les processeurs à :
déterminer à plusieurs reprises une première trajectoire d'un objet en mouvement avec une première fréquence, en fonction de données individuelles de capteurs,
déterminer à plusieurs reprises, avec une deuxième fréquence inférieure à la première fréquence, la nécessité ou non de générer des informations de modification de trajectoire, et
en réaction à la détermination de la nécessité de générer les informations de modification de trajectoire, déterminer la trajectoire finale de l'objet en mouvement par modification de la première trajectoire en fonction des informations de modification de trajectoire ;
ladite détermination effectuée à plusieurs reprise de la nécessité ou non de générer des informations de modification de trajectoire comprenant :
l'introduction d'au moins une donnée individuelle de capteurs parmi les données individuelles de capteurs dans un encodeur qui encode ladite au moins une donnée individuelle de capteurs,
l'introduction de l'au moins une donnée individuelle de capteurs encodée dans un modèle de réseau neuronal génératif afin de déterminer si les informations de modification de trajectoire doivent être générées.

12. Dispositif électronique selon la revendication 11, dans lequel les instructions sont en outre conçues pour amener le ou les processeurs à
déterminer une trajectoire globale de l'objet en mouvement en fonction de l'au moins une donnée individuelle de capteurs parmi les données individuelles de capteurs,
reconnaître et suivre un élément en mouvement dans l'environnement de l'objet en mouvement en fonction de l'au moins une donnée individuelle de capteurs parmi les données individuelles de capteurs, et générer des informations cartographiques, et
déterminer une trajectoire locale de l'objet en mouvement en fonction de l'élément en mouvement, des informations cartographiques et de la trajectoire globale.

13. Dispositif électronique selon la revendication 12, dans lequel les instructions sont en outre conçues pour amener le ou les processeurs à
modifier la trajectoire locale en fonction des informations de modification de trajectoire pour déterminer la trajectoire finale.

14. Dispositif électronique selon l'une quelconque des revendications 11 à 13, dans lequel une invite par défaut est définie pour que le modèle de réseau neuronal génératif produise les informations de modification de trajectoire ;
et/ou dans lequel les instructions sont en outre conçues pour amener le ou les processeurs à :
acquérir des résultats encodés correspondant respectivement aux données individuelles de capteurs, et
concaténer les résultats encodés pour générer au moins une donnée individuelle de capteurs encodée.
